# EUROPEAN PATENT SPECIFICATION

(11) **EP 2 509 380 B1**
(45) Date of publication and mention of the grant of the patent: **12.06.2019**
(21) Application number: 11774307.0
(22) Date of filing: 08.03.2011
(51) Int. Cl.: H04W 72/00

(54) **METHOD AND DEVICE FOR DISTRIBUTING AND SCHEDULING WIRELESS RESOURCES IN ORTHOGONAL FREQUENCY DIVISION MULTIPLEXING SYSTEM**
VERFAHREN UND VORRICHTUNG ZUR VERTEILUNG UND PLANUNG DRAHTLOSER RESSOURCEN IN EINEM ORTHOGONALEN FREQUENZTRENNUNGS-MULTIPLEXING-SYSTEM
PROCÉDÉ ET DISPOSITIF DE DISTRIBUTION ET DE PLANIFICATION DE RESSOURCES SANS FIL DANS UN SYSTÈME DE MULTIPLEXAGE PAR RÉPARTITION ORTHOGONALE DE LA FRÉQUENCE

(30) Priority: 28.04.2010 CN 201010159884
(43) Date of publication of application: 10.10.2012
(73) Proprietor: ZTE Corporation, Shenzhen, Guangdong 518057 (CN)
(72) Inventor: DAI, Qian, Shenzhen Guangdong 518057 (CN)
(74) Representative: AWA Sweden AB
(86) International application number: PCT/CN2011/071617
(87) International publication number: WO 2011/134316

(56) References cited:
- EP-A1- 2 034 760
- EP-A1- 2 056 500
- WO-A1-2007/094628
- WO-A2-2008/025506
- WO-A2-2008/054157
- CN-A- 101 374 017
- CN-A- 101 399 800
- US-A1- 2009 262 692

## Description

### Technical Field

The present invention relates to the field of wireless communication technology, and especially, to a method and device for distributing and scheduling wireless resources in an orthogonal frequency division multiplexing system.

### Background of the Related Art

In an Evolved Universal Terrestrial Radio Access Network (E-UTRAN) of the 3rd generation mobile communication Long Term Evolution (LTE) system, uplink data are transmitted through a Physical Uplink Shared Channel (PUSCH), and downlink data are transmitted through a Physical Downlink Shared Channel (PDSCH).

An Evolved NodeB (eNB) allocates uplink wireless resources to each User Equipment (UE), which are used for uplink transmission, or indicating at which downlink wireless resource the UE receives downlink transmission.

The access technology used by LTE is the Orthogonal Frequency Division Multiplexing (OFDM) technology. Compared with the 2nd generation mobile communication system, the wireless resource management of LTE has characteristics of wide bandwidth and multiple time processes, the wireless resources thereof emerge in a bi-dimensional way of time and frequency, and the number of users which can be borne greatly increases.

Resources in the LTE system take a Resource Block (RB), or called as a Physical Resource Block (PRB), as a unit. The RB in uplink is defined as that: one RB occupies 12 sub-carriers on the frequency domain and 1 time slot on the time domain, that is, 7 Single Carrier-Frequency Division Multiplex Access (SC-FDMA) symbols when using a Normal cyclic prefix or 6 SC-FDMA symbols when using an Extended Cyclic Prefix (CP).

The definition of RB in the downlink is identical to that in the uplink, one RB occupies 12 sub-carriers on the frequency domain and 1 time slot on the time domain, that is, 7 OFDM symbols when using the normal CP or 6 OFDM symbols when using the extended CP.

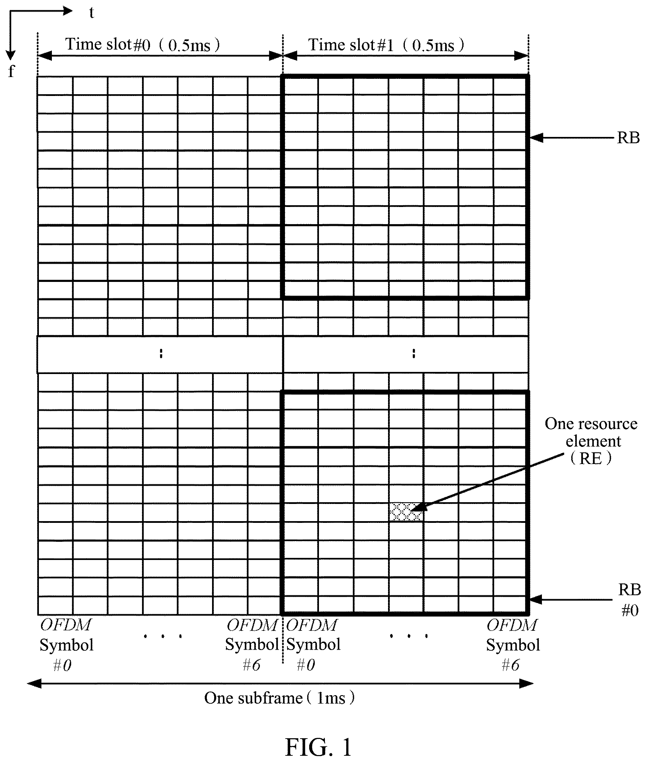

One structure of the RB is as shown in FIG. 1, the minimum unit of the resources is a Resource Element (RE), with the frequency domain width being one sub-carrier and the time domain width being one symbol (which refers to one SC-FDMA symbol in the uplink and one OFDM symbol in the downlink); the frequency domain width of one RB is 12 sub-carriers and the time domain width of one RB is 7 symbols.

The resource scheduling in the existing LTE system takes the RB as the unit on the frequency domain and a subframe as the unit on the time domain (one subframe corresponds to 2 time slots). It should be noted that, even though the time domain width defined by a LTE protocol is one time slot, in resource scheduling signaling of the LTE system, the default time domain width of one RB is one subframe, that is to say, the minimum resource scheduling granularity in the existing LTE system is 12 sub-carriers*1 subframe. This kind of resource scheduling granularity is suited for current radio communication services, the communication service with the minimum data volume is Voice over Internet Protocol (VoIP) service currently, and a size of a single packet of the VoIP service is about 40 bytes and needs to occupy about 1-3 RBs.

However, with the development of the Internet of Things and the introduction of Machine to Machine (M2M) service, a demand for a great deal of small data volume transmission exists, such as services of burglar alarm and remote meter reading and so on, the size of the packet generated at a single time may only be several bytes or about ten bytes, which is much smaller than the size of a single packet of the above VoIP service. Therefore, when the existing LTE system bears this kind of service, great waste of wireless resources will be generated for only a little ratio of the distributed wireless resources is used, which causes frequency spectrum efficiency of the whole system to decline seriously.

The document EP2034760 discloses that a base station includes a scheduler at least determining a resource block assigned to a data channel, a transmitted signal generation unit generating a signal to transmit the data channel in accordance with scheduling information supplied from the scheduler, a transmission unit transmitting the signal to a user apparatus, and a resource block size adjustment unit adjusting a size of the resource block.

The document EP2056500 discloses that a transmission device is disclosed that includes a frequency scheduling unit configured to allocate resource blocks as a unit to each user, the resource blocks being blocks of consecutive frequency subcarriers divided from a system bandwidth, constitute a first group including consecutive plural resource blocks, constitute plural second groups, each including one or more resource blocks of the plural resource blocks constituting each first group, and allocate the resource blocks of either the first group or one or more the second groups.

The document US2009/262692 discloses a system for variable-sized resource block allocation in a communication system.

The document WO2008/054157 discloses a resource allocation method and a resource allocation information transmission method, and smallest units of resource allocation are set as basic resource blocks and groups of a specific number of basic resource blocks are set as group resource blocks.

### Summary of the Invention

In view of this, the main object of the present invention is to provide a method and device for distributing and scheduling wireless resources in an orthogonal frequency division multiplexing system, and provide more efficient resource allocation for services with small data volume, so as to improve the utilization ratio of wireless resources.

The object of the present invention is achieved by the features of the appended independent claims.

### Brief Description of Drawings

FIG. 1 is a schematic diagram of an RB in the existing LTE system.
FIG. 2 is a flow diagram of the method for distributing and scheduling wireless resources according to the present invention.
FIG. 3 is a schematic diagram of example 1 of structure of the short resource unit according to the present invention.
FIG. 4 is a schematic diagram of example 2 of structure of the short resource unit according to the present invention.
FIG. 5 is a schematic diagram of allocating wireless resources in a distributed mode according to the present invention.
FIG. 6 is a schematic diagram of allocating wireless resources in a continuous mode according to the present invention.
FIG. 7 is a structure diagram of the device for distributing and scheduling wireless resources according to the present invention.

### Preferred Embodiments of the Present Invention

The technical scheme of the present invention will be further described in detail in combination with the accompany drawings and specific examples below.

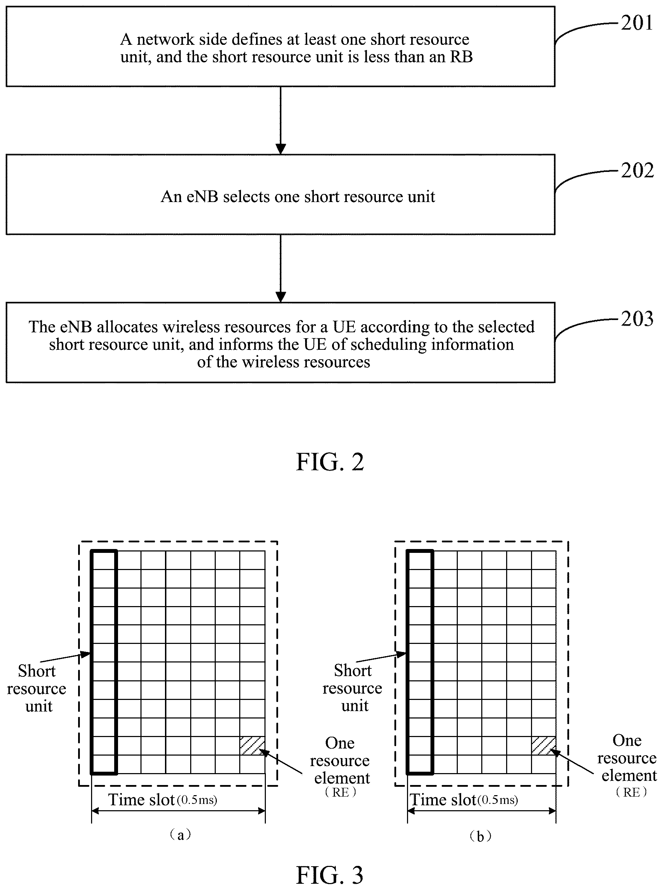

The main idea for distributing and scheduling wireless resources of the present invention is as shown in FIG. 2, and following steps are included.

In step 201, a network side defines at least one short resource unit, and the short resource unit is less than a Resource Block (RB).

In order to improve the allocation efficiency of wireless resources and guarantee a compatibility with the allocation of wireless resources in the related art, the network side redefines a wireless resource unit in the present invention, a characteristic of the redefined wireless resource unit is that the wireless resource unit is must be less than a wireless resource unit in the existing LTE system, namely the RB. Therefore, the redefined wireless resource unit is called as a short resource unit in the present invention, wherein, the network side can define at least one short resource unit.

The definition of the short resource unit will be described through specific examples below.

In the present invention, a minimum resource allocation granularity is defined, a frequency domain width of the minimum resource allocation granularity is 12 sub-carriers and a time domain width of the minimum resource allocation granularity is one symbol (which refers to one SC-FDMA symbol in the uplink and one OFDM symbol in the downlink).

Preferably, in order to furthest improve the allocation efficiency of resources and guarantee a compatibility with the allocation of wireless resources in the related art, the short resource unit can be the minimum resource allocation granularity. Certainly, the definition of the short resource unit also can have other ways, if a diversity of M2M service is considered, the short resource unit also can be defined as a multiple of the minimum resource allocation granularity, such as 2 times, 3 times and 4 times and so on, but the maximum can not exceed 14 times, since the short resource unit of the present invention must be less than the RB and the RB occupies one subframe on the time domain. When a normal CP is used, one subframe is precisely 14 symbols; and when an extended CP is used, one subframe is precisely 12 symbols. Therefore, in the present invention, when the short resource unit is defined, the minimum resource allocation granularity not more than 14 times in the normal CP and the minimum resource allocation granularity not more than 12 times in the extended CP are required.

The example of the short resource unit defined by the network side is as shown in table 1.

**Table 1**

| Short resource unit serial number | Definition of short resource unit when the normal CP is used | Definition of short resource unit when the extended CP is used |
|---|---|---|
| 0 | 12 sub-carriers*1 symbol | 12 sub-carriers*1 symbol |
| 1 | 12 sub-carriers*2 symbols | 12 sub-carriers*2 symbols |
| 2 | 12 sub-carriers*4 symbols | 12 sub-carriers*3 symbols |
| 3 | 12 sub-carriers*7 symbols | 12 sub-carriers*6 symbols |

It can be seen from table 1 that, with respect to the normal CP and extended CP, the network side defines four short resource units respectively. Therefore, in the actual use, an eNB can select one of the four resource units above according to specific circumstances, which will be described in the subsequent examples specifically.

When the normal CP is used, the structure of short resource unit 0 is as shown in FIG. 3 (a); and when the extended CP is used, the structure of short resource unit 0 is as shown in FIG. 3 (b).

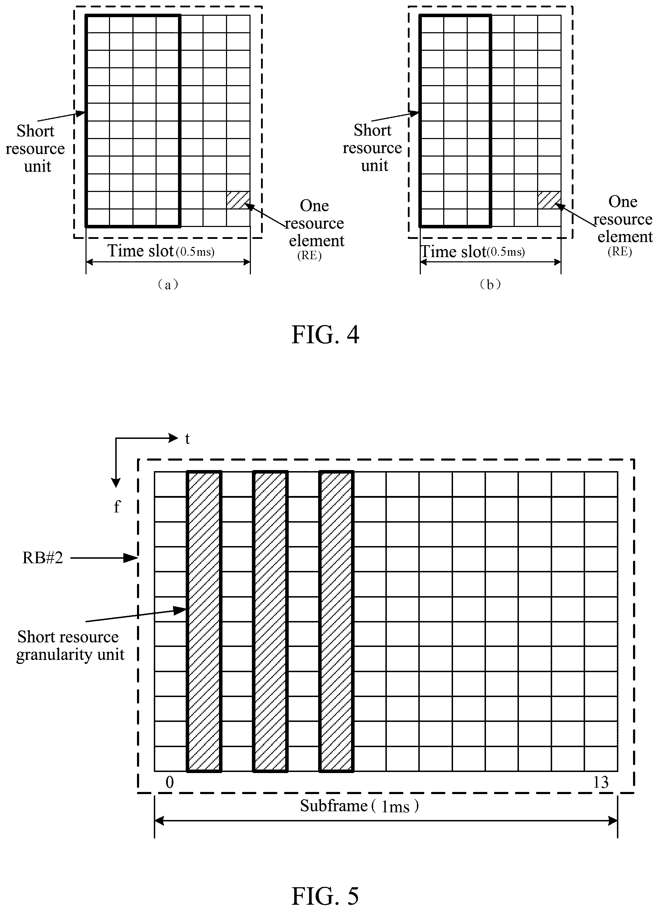

When the normal CP is used, the structure of short resource unit 2 is as shown in FIG. 4 (a); and when the extended CP is used, the structure of short resource unit 2 is as shown in FIG. 4 (b).

In step 202, an eNB selects one short resource unit.

After the network side defines the short resource unit, the eNB performs a selection of short resource units. Specifically, the eNB can select one short resource unit fixedly, which is called as a static selection method; and the eNB also can select one short resource unit according to service data information, QoS requirement and wireless channel state of a UE, which is called as a dynamic selection method.

If the eNB selects the short resource unit according to the service data information, QoS requirement and wireless channel state of the UE based on the short resource units provided by the table 1,
the service data information of the UE, namely a size of a service packet, can be saved at the network side in advance, for example, saved in subscription information of the services, thus, the information has been already known by the eNB, or the information can also be reported by the UE to a base station in communication process.

For example: there are three types of UEs within the coverage area of the eNB, which are a normal cellphone, a portable health monitor and an industrially produced pressure gage respectively. The eNB firstly analyzes the service data information, QoS requirement and wireless channel states of these three terminals as follows.

For the service data information: the normal cellphone supports a VoIP service, and the size of a single packet of the VoIP service is 40 bytes and is reported once per 20ms; the size of packet reported by the portable health monitor each time is 20 bytes and is reported once per second; and the size of a single packet of the industrially produced pressure gage is 3 bytes and is reported once per 0.5s.

For the wireless channel state: the normal cellphone and portable health monitor both belong to mobile terminals, and a wireless channel of the mobile terminal belongs to a time-varying channel; and the industrially produced pressure gage belongs to a fixed terminal, and a wireless channel of the fixed terminal is in a steady state.

For the QoS requirement: in the QoS requirement of the normal cellphone, the requirement on error rate is relatively low, but the requirement on scheduling delay is relatively high; and requirements of the portable health monitor and industrially produced pressure gage on the error rate are relatively high, but requirements on the scheduling delay are relatively low.

The eNB takes the above information into the comprehensive consideration to decide which kind of short resource unit is used for the three kinds of UEs respectively.

For the normal cellphone, since the size of packet thereof belongs to a relatively large category in small data services, the wireless resource unit specified by the related art can still be used, that is, the RB is taken as the unit to perform resource allocation.

For the portable health monitor, the size of packet thereof belongs to a medium level in the small data services, the smaller wireless resource unit can be used, and that is, the short resource unit of the present invention is used. However, in consideration of that the QoS thereof has a higher requirement on the error rate and what is used is a time varying wireless channel, and also because the time varying wireless channel means that a higher modulation encoding level (the modulation encoding level refers to a modulation mode and an encoding rate used in sending links, wherein, the modulation mode refers to QPSK modulation, 16QAM modulation and 64QAM modulation; the encoding rate refers to the ratio of pre-encoded information bit length to encoded information bit length and is a decimal between 0 and 1 normally; and the use of modulation mode with higher order and encoding rate more closer to 1 represents that the modulation encoding level is more higher) can not be used, a too small short resource unit is not suitable to be used. If based on the table 1, the short resource unit of the serial number 3 can be used, i.e. 12 sub-carriers * 7 symbols.

For the industrially produced pressure gage, the size of packet thereof belongs to an extreme small category in the small data services, and the requirement on the error rate is higher. However, in consideration of that the wireless channel state thereof is steady (which means the higher modulation encoding level can be used), a smaller short resource unit can be used, for example, the short resource unit of the serial number 0 in table 1 is used.

In conclusion, when the eNB selects the short resource unit for the UE with a short data service, one of the following two principles also can be followed.

One, that one short resource unit can bear the whole packet is guaranteed, thus it is not required to inform the UE of the number of the allocated resources (for the number of resources is always 1), therefore, the overhead of control signaling can be saved.

Two, that one short resource unit can bear the whole packet is not guaranteed, thus it is required to inform the UE of the number of the allocated resources, and the application is relatively flexible.

Certainly, when referring to the service data information, QoS requirement and wireless channel state of the UE, or when selecting one short resource unit fixedly, the eNB can also follow one of the above two principles to select the short resource unit at the same time, and thus the selected short resource unit will be more reasonable.

In step 203, the eNB allocates the wireless resources for the UE according to the selected short resource unit, and informs the UE of scheduling information of the wireless resources.

After the short resource unit is determined, the eNB determines the allocated frequency domain position and time domain position, and the modulation encoding level according to the wireless channel state of the UE, the related art can be used for the specific implementation, which will not be repeated here. Then, the eNB can determine the number of the allocated short resources according to the service data information, namely the size of service packet.

After allocation of the wireless resources is completed, the eNB sends the scheduling information of the wireless resources to the UE. The scheduling information of the wireless resources is different according to a difference between allocation modes of the wireless resources.

For example, when a distributed mode is used in the allocation of the wireless resources, and as shown FIG. 5, the scheduling information of the wireless resources includes:
short resource unit information (mainly a short resource unit serial number defined by the network side): in combination with table 1, it can be known from FIG. 5 that the short resource unit information is 0;
resource initial position information (including a serial number of an RB in which resources are located, or a serial number of an RB in which resources are located and a serial number of a symbol corresponding to a bitmap initial position on the RB): it can be known from FIG. 5 that the serial number of the RB is 2 and the serial number of the symbol corresponding to the bitmap initial position is 0;
resource bitmap information: 0101010000000 is obtained according to FIG. 5, wherein, 1 indicates a position of an allocated resource.

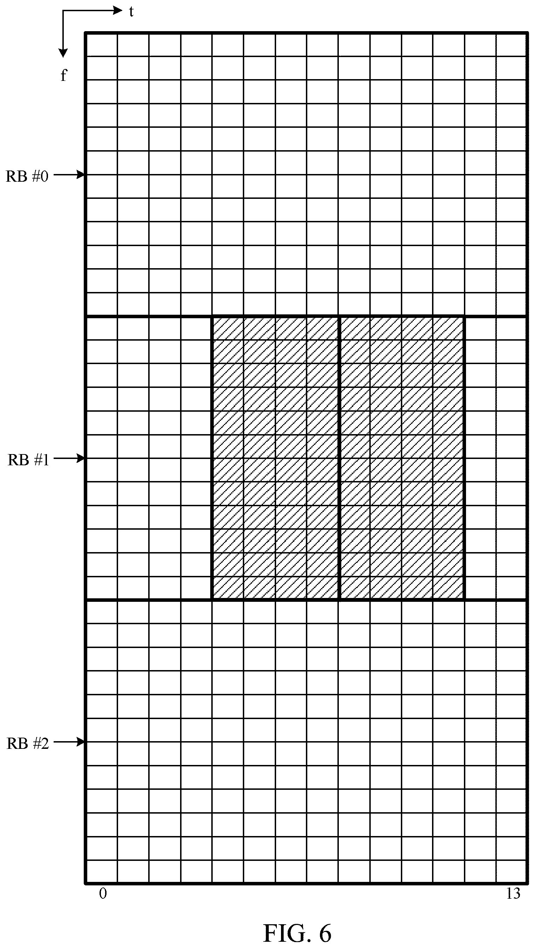

When a continuous mode is used in the allocation of the wireless resources, and as shown FIG. 6, the scheduling information of the wireless resources includes:
short resource unit information (mainly a short resource unit serial number defined by the network side): in combination with table 1, it can be known from to FIG. 6 that the short resource unit information is 2;
resource initial position information (including a serial number of an RB in which a resource initial position is located, and a serial number of a symbol in which the resource initial position is located): it can be known from to FIG. 6 that the serial number of the RB is 1 and the serial number of the symbol corresponding to the resource initial position is 4;
the number of resources: 2.

The scheduling information of the wireless resources can be sent to the UE through a Physical Downlink Control Channel (PDCCH), and also can be sent to terminals through Radio Resource Control (RRC) message, or a Media Access Control (MAC) Control Element (CE), namely MAC CE.

Wherein, when the scheduling information of the wireless resources is sent to the UE through the PDCCH, following three modes can be used.

In Mode 1, the scheduling information of the wireless resources is added into the existing various PDCCH DCI format message. Formats of PDCCH information include: format 0, 1, 1A, 1B, 1C, 1D, 2, 2A, 3 and 3A, which are applied to the uplink resource scheduling and downlink resource scheduling respectively.

In Mode 2, special PDCCH DCI format message is added and used for the resource scheduling of small data services, and the scheduling information of the wireless resources is carried therein. Compared with the existing PDCCH DCI format message in mode 1, the special PDCCH DCI format message can be allowed to not carry length information of the RB.

For example, a PDCCH DCI format 0A message is added and used for the resource scheduling of uplink small data services, wherein, the scheduling information of the wireless resources can be defined in the following ways:
1. Short resource unit information;
2. A serial number of an RB in which a resource initial position is located;
3. A serial number of a symbol in which a resource initial position is located;
4. the number of resources.

For example, a PDCCH DCI format IE message is added and used for the resource scheduling of downlink small data services, wherein, the scheduling information of the wireless resources can be defined in the following ways:
1. Resource allocation using flags for continuous mode/distributed mode;
2. Short resource unit information;
3. If the continuous mode is used, the scheduling information further including:
   3.1. A serial number of an RB in which a resource initial position is located;
   3.2. A serial number of a symbol in which a resource initial position is located;
   3.3. the number of resources;
4. If the distributed mode is used, the scheduling information further including:
   4.1. A serial number of an RB in which resources are located, or a serial number of an RB in which resources are located and a serial number of a symbol in which a bitmap initial position is located on the RB;
   4.2. Resource bitmap information.

In Mode 3, fields related to the scheduling of the wireless resources in the existing various PDCCH DCI format message are redefined as the scheduling information of the wireless resources.

For example, the existing uplink resource scheduling signaling PDCCH DCI format 0 is taken as an example:
1. The information about whether it is used for resource scheduling of small data services is added into the message;
2. If it is used for the resource scheduling of the small data services, the fields related to the scheduling information of the wireless resources in the message are redefined, so as to make the fields available for the resource scheduling of the small data services, for example, mode 2 can be used, which will not be repeated here.

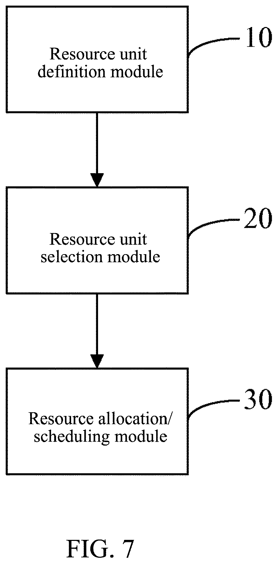

In order to implement the above method, the present invention provides a device for distributing and scheduling wireless resources in an orthogonal frequency division multiplexing system, and as shown in FIG. 7, the device comprises:
a resource unit definition module 10, configured to define at least one short resource unit, wherein, the short resource unit is less than an RB;
a resource unit selection module 20, configured to select a short resource unit; and
a resource allocation/scheduling module 30, configured to allocate the wireless resources for a User Equipment (UE) according to the selected short resource unit, and inform the UE of scheduling information of the wireless resources.

Wherein, the resource unit definition module 10 is further configured to: define a minimum resource allocation granularity with a frequency domain width being 12 sub-carriers and a time domain width being one symbol; and further configured to define the short resource unit as a multiple of the minimum resource allocation granularity;
the resource unit selection module 20 is further configured to: select a short resource unit fixedly; or select a short resource unit according to service data information, QoS requirement and a wireless channel state of the UE; and
the resource allocation/scheduling module 30 is further configured to: inform the UE of the scheduling information of the wireless resources through a PDCCH, or RRC message, or a MAC CE.

Wherein, the resource unit definition module 10 is applied in the network side, and the resource unit selection module 20 and resource allocation/scheduling module 30 are applied in a base station.

The above description is only the preferred examples of the present invention, which is not used to limit the protection scope of the present invention.

## Claims

1. A method for distributing and scheduling wireless resources in an orthogonal frequency division multiplexing system, the method comprising:
a network side defining at least one short resource unit, wherein the short resource unit is less than a Resource Block, RB (201);
the network side selecting a short resource unit (202), wherein the network side selecting the short resource unit specifically comprises: the network side selecting one short resource unit according to Quality of Service, QoS, requirement and a wireless channel state of a User Equipment, UE; and
the network side allocating the wireless resources for the User Equipment, UE, according to the selected short resource unit, and informing the UE of scheduling information of the wireless resources (203),
wherein defining the short resource unit specifically comprises:
the network side defining a minimum resource allocation granularity as that a frequency domain width is 12 sub-carriers and a time domain width is one symbol;
when used for an uplink wireless resource allocation, the symbol is a Single Carrier-Frequency Division Multiplex Access, SC-FDMA, symbol; when used for a downlink wireless resource allocation, the symbol is an Orthogonal Frequency Division Multiplexing, OFDM, symbol;
the short resource unit is a multiple of the minimum resource allocation granularity,
wherein when the system uses a normal Cyclic Prefix, CP, a value of the multiple is 1 to 13; when the system uses an extended CP, a value of the multiple is 1 to 11.

2. The method for distributing and scheduling the wireless resources in the orthogonal frequency division multiplexing system according to claim 1, wherein
when a distributed mode is used in an allocation of the wireless resources, the scheduling information of the wireless resources comprises: a serial number of short resource unit, resource initial position information and resource bitmap information; and the resource initial position information comprises: a serial number of an RB in which wireless resources are located, or a serial number of an RB in which wireless resources are located and a serial number of a symbol in which a bitmap initial position is located on the RB;
when a continuous mode is used in an allocation of the wireless resources, the scheduling information of the wireless resources comprises: a serial number of short resource unit, resource initial position information and a number of resources; and the resource initial position information comprises: a serial number of an RB in which a wireless resource initial position is located, and a serial number of a symbol in which the wireless resource initial position is located.

3. The method for distributing and scheduling the wireless resources in the orthogonal frequency division multiplexing system according to claim 2, wherein informing the UE of the scheduling information of the wireless resources is specifically:
informing the UE of the scheduling information of the wireless resources through a Physical Downlink Control Channel, PDCCH, or Radio Resource Control, RRC, message, or a Media Access Control, MAC, Control Element, CE.

4. The method for distributing and scheduling the wireless resources in the orthogonal frequency division multiplexing system according to claim 3, wherein informing the UE of the scheduling information of the wireless resources through the PDCCH is specifically:
adding the scheduling information of the wireless resources into PDCCH DCI format message to send to the UE; or
adding special PDCCH DCI format message to carry the scheduling information of the wireless resources and sending to the UE; or
redefining fields related to scheduling of the wireless resources in the PDCCH DCI format message to carry the scheduling information of the wireless resources and sending to the UE.

5. A device for distributing and scheduling wireless resources in an orthogonal frequency division multiplexing system, the device comprising:
a resource unit definition module (10), configured to define at least one short resource unit which is less than an RB; configured to define a minimum resource allocation granularity as that a frequency domain width is 12 sub-carriers and a time domain width is one symbol, wherein when used for an uplink wireless resource allocation, the symbol is a Single Carrier-Frequency Division Multiplex Access, SC-FDMA, symbol, and when used for a downlink wireless resource allocation, the symbol is an Orthogonal Frequency Division Multiplexing, OFDM, symbol; configured to define the short resource unit as a multiple of the minimum resource allocation granularity, wherein a normal Cyclic Prefix, CP, is used, a value of the multiple is 1 to 13; when an extended CP is used, a value of the multiple is 1 to 11;
a resource unit selection module (20), configured to select a short resource unit according to QoS requirement and a wireless channel state of a User Equipment, UE ;
a resource allocation/scheduling module (30), configured to allocate the wireless resources for the User Equipment, UE, according to the selected short resource unit, and inform the UE of scheduling information of the wireless resources.

6. The device for distributing and scheduling the wireless resources in the orthogonal frequency division multiplexing system according to claim 5, wherein
the resource allocation/scheduling module (30) is further configured to inform the UE of the scheduling information of the wireless resources through a PDCCH, or RRC message, or an MAC CE.

## Patentansprüche

1. Verfahren zum Verteilen und Disponieren von Drahtlos-Ressourcen in einem Orthogonal Frequency Division Multiplexing-System, wobei das Verfahren Folgendes umfasst:
eine Netzseite definiert mindestens eine kurze Ressourceneinheit, wobei die kurze Ressourceneinheit weniger ist als ein Ressourcenblock (RB) (201);
die Netzseite wählt eine kurze Ressourceneinheit (202) aus, wobei der Vorgang, in dem die Netzseite die kurze Ressourceneinheit auswählt, insbesondere Folgendes umfasst: die Netzseite wählt eine einzelne kurze Ressourceneinheit gemäß einer Quality of Service (QoS)-Anforderung und einem Drahtloskanalzustand einer Nutzerausrüstung (User Equipment, UE) aus; und
die Netzseite weist die Drahtlos-Ressourcen für die Nutzerausrüstung (UE) gemäß der ausgewählten kurzen Ressourceneinheit zu und informiert die UE über Disponierungsinformationen der Drahtlos-Ressourcen (203),
wobei das Definieren der kurzen Ressourceneinheit insbesondere Folgendes umfasst:
die Netzseite definiert eine Mindest-Ressourcenzuweisungsauflösung so, dass eine Frequenzbereichsbreite 12 Subträger beträgt und eine Zeitbereichsbreite ein einzelnes Symbol beträgt;
wenn das Symbol für eine Uplink-Drahtlosressourcenzuweisung verwendet wird, so ist es ein Single Carrier Frequency Division Multiplex Access (SC-FDMA)-Symbol; und wenn das Symbol für eine Downlink-Drahtlosressourcenzuweisung verwendet wird, so ist es ein Orthogonal Frequency Division Multiplexing (OFDM)-Symbol;
die kurze Ressourceneinheit ist ein Vielfaches der Mindest-Ressourcenzuweisungsauflösung,
wobei, wenn das System einen normalen zyklischen Präfix (Cyclic Prefix, CP) verwendet, ein Wert des Vielfachen 1 bis 13 ist; und wenn das System einen erweiterten CP verwendet, ein Wert des Vielfachen 1 bis 11 ist.

2. Verfahren zum Verteilen und Disponieren der Drahtlos-Ressourcen in dem Orthogonal Frequency Division Multiplexing-System nach Anspruch 1, wobei,
wenn ein verteilter Modus in einer Zuweisung der Drahtlos-Ressourcen verwendet wird, die Disponierungsinformationen der Drahtlos-Ressourcen Folgendes umfassen: eine laufende Nummer der kurzen Ressourceneinheit, Ressourcen-Anfangspositionsinformationen und Ressourcen-Bitmap-Informationen; und die Ressourcen-Anfangspositionsinformationen Folgendes umfassen: eine laufende Nummer eines RB, in dem sich Drahtlos-Ressourcen befinden, oder eine laufende Nummer eines RB, in dem sich Drahtlos-Ressourcen befinden, und eine laufende Nummer eines Symbols, in dem sich eine Bitmap-Anfangsposition in dem RB befindet;
wenn ein kontinuierlicher Modus in einer Zuweisung der Drahtlos-Ressourcen verwendet wird, die Disponierungsinformationen der Drahtlos-Ressourcen Folgendes umfassen: eine laufende Nummer einer kurzen Ressourceneinheit, Ressourcen-Anfangspositionsinformationen und eine Anzahl von Ressourcen; und die Ressourcen-Anfangspositionsinformationen Folgendes umfassen: eine laufende Nummer eines RB, in dem sich eine Drahtlosressourcen-Anfangsposition befindet, und eine laufende Nummer eines Symbols, in dem sich die Drahtlosressourcen-Anfangsposition befindet.

3. Verfahren zum Verteilen und Disponieren der Drahtlos-Ressourcen in dem Orthogonal Frequency Division Multiplexing-System nach Anspruch 2, wobei das Informieren die UE über die Disponierungsinformationen der Drahtlos-Ressourcen insbesondere Folgendes ist:
Informieren der UE über die Disponierungsinformationen der Drahtlos-Ressourcen durch eine Physical Downlink Control Channel (PDCCH)- oder Radio Ressource Control (RRC)-Nachricht oder ein Media Access Control (MAC)-Steuerungselement (Control Element, CE).

4. Verfahren zum Verteilen und Disponieren der Drahtlos-Ressourcen in dem Orthogonal Frequency Division Multiplexing-System nach Anspruch 3, wobei das Informieren der UE der Disponierungsinformationen über die Drahtlos-Ressourcen durch den PDCCH insbesondere Folgendes ist:
Einbinden der Disponierungsinformationen der Drahtlos-Ressourcen in eine PDCCH-DCI-Format-Nachricht zum Senden an die UE; oder
Hinzufügen einer speziellen PDCCH-DCI-Format-Nachricht zum Transportieren der Disponierungsinformationen der Drahtlos-Ressourcen und Senden an die UE; oder
Neudefinieren von Feldern im Zusammenhang mit dem Disponieren der Drahtlos-Ressourcen in der PDCCH-DCI-Format-Nachricht zum Transportieren der Disponierungsinformationen der Drahtlos-Ressourcen und Senden an die UE.

5. Vorrichtung zum Verteilen und Disponieren von Drahtlos-Ressourcen in einem Orthogonal Frequency Division Multiplexing-System, wobei die Vorrichtung Folgendes umfasst:
ein Ressourceneinheit-Definitionsmodul (10), das dafür konfiguriert ist, mindestens eine kurze Ressourceneinheit zu definieren, die weniger ist als ein RB; das dafür konfiguriert ist, eine Mindest-Ressourcenzuweisungsauflösung so zu definieren, dass eine Frequenzbereichsbreite 12 Subträger beträgt und eine Zeitbereichsbreite ein einzelnes Symbol beträgt, wobei, wenn das Symbol für eine Uplink-Drahtlosressourcenzuweisung verwendet wird, es ein Single Carrier Frequency Division Multiplex Access (SC-FDMA)-Symbol ist; und wenn das Symbol für eine Downlink-Drahtlosressourcenzuweisung verwendet wird, es ein Orthogonal Frequency Division Multiplexing (OFDM)-Symbol ist; das dafür konfiguriert ist, die kurze Ressourceneinheit als ein Vielfaches der Mindest-Ressourcenzuweisungsauflösung zu definieren, wobei, wenn ein normaler zyklischer Präfix (Cyclic Prefix, CP) verwendet wird, ein Wert des Vielfachen 1 bis 13 ist; und wenn ein erweiterter CP verwendet wird, ein Wert des Vielfachen 1 bis 11 ist;
ein Ressourceneinheit-Auswahlmodul (20), das dafür konfiguriert ist, eine kurze Ressourceneinheit gemäß einer QoS-Anforderung und einem Drahtloskanalzustand einer Nutzerausrüstung (User Equipment, UE) auszuwählen;
ein Ressourcenzuweisungs-/-disponierungsmodul (30), das dafür konfiguriert ist, die Drahtlos-Ressourcen für die Nutzerausrüstung (UE) gemäß der ausgewählten kurzen Ressourceneinheit zuzuweisen und die UE über die Disponierungsinformationen der Drahtlos-Ressourcen zu informieren.

6. Vorrichtung zum Verteilen und Disponieren der Drahtlos-Ressourcen in dem Orthogonal Frequency Division Multiplexing-System nach Anspruch 5, wobei
das Ressourcenzuweisungs-/-disponierungsmodul (30) des Weiteren dafür konfiguriert ist, die UE über die Disponierungsinformationen der Drahtlos-Ressourcen durch eine PDCCH- oder RRC-Nachricht oder ein MAC-CE zu informieren.

## Revendications

1. Procédé de distribution et de programmation de ressources sans fil dans un système de multiplexage par répartition de fréquence orthogonale, le procédé comprenant :
par un côté de réseau, la définition d'au moins une unité de ressource courte, dans lequel l'unité de ressource courte est inférieure à un bloc de ressources, RB, (201) ;
par le côté de réseau, la sélection d'une unité de ressource courte (202), dans lequel la sélection, par le côté de réseau, de l'unité de ressource courte comprend spécifiquement : la sélection, par le côté de réseau, d'une unité de ressource courte en fonction d'une exigence de qualité de service, QoS, et d'un état de canal sans fil d'un équipement d'utilisateur, UE ; et
par le côté de réseau, l'allocation des ressources sans fil pour l'équipement d'utilisateur, UE, en fonction de l'unité de ressource courte sélectionnée, et la notification, à l'UE, d'informations de programmation des ressources sans fil (203),
dans lequel la définition de l'unité de ressource courte comprend spécifiquement :
par le côté de réseau, la définition d'une granularité d'allocation de ressource minimale telle qu'une largeur de domaine de fréquence soit 12 sous-porteuses et une largeur de domaine de temps soit un symbole ;
lors d'une utilisation pour une allocation de ressources sans fil de liaison montante, le symbole est un symbole d'accès à multiplexage par répartition de fréquence à porteuse unique, SC-FDMA ; lors d'une utilisation pour une allocation de ressources sans fil de liaison descendante, le symbole est un symbole de multiplexage par répartition de fréquence orthogonale, OFDM ;
l'unité de ressource courte est un multiple de la granularité d'allocation de ressource minimale,
dans lequel, lorsque le système utilise un préfixe cyclique, CP, normal, une valeur du multiple est 1 à 13 ; lorsque le système utilise un CP étendu, une valeur du multiple est 1 à 11.

2. Procédé de distribution et de programmation des ressources sans fil dans le système de multiplexage par répartition de fréquence orthogonale selon la revendication 1, dans lequel
lorsqu'un mode distribué est utilisé dans une allocation des ressources sans fil, les informations de programmation des ressources sans fil comprennent : un numéro de série de l'unité de ressource courte, des informations de position initiale de ressource et des informations de bitmap de ressource ; et les informations de position initiale de ressource comprennent : un numéro de série d'un RB dans lequel des ressources sans fil sont situées, ou un numéro de série d'un RB dans lequel des ressources sans fil sont situées et un numéro de série d'un symbole dans lequel une position initiale de bitmap est située sur le RB ;
lorsqu'un mode continu est utilisé dans une allocation des ressources sans fil, les informations de programmation des ressources sans fil comprennent : un numéro de série de l'unité de ressource courte, des informations de position initiale de ressource et un nombre de ressources ; et les informations de position initiale de ressource comprennent : un numéro de série d'un RB dans lequel une position initiale de ressource sans fil est située, et un numéro de série d'un symbole dans lequel la position initiale de ressource sans fil est située.

3. Procédé de distribution et de programmation des ressources sans fil dans le système de multiplexage par répartition de fréquence orthogonale selon la revendication 2, dans lequel la notification, à l'UE, des informations de programmation des ressources sans fil est spécifiquement :
la notification, à l'UE, des informations de programmation des ressources sans fil par l'intermédiaire d'un message de canal de commande de liaison descendante physique, PDCCH, ou de commande de ressources radio, RRC, ou un élément de commande, CE, de commande d'accès au support, MAC.

4. Procédé de distribution et de programmation des ressources sans fil dans le système de multiplexage par répartition de fréquence orthogonale selon la revendication 3, dans lequel la notification, à l'UE, des informations de programmation des ressources sans fil par l'intermédiaire du PDCCH est spécifiquement :
l'ajout des informations de programmation des ressources sans fil au message de format PDCCH DCI à envoyer à l'UE ; ou
l'ajout d'un message de format PDCCH DCI spécial pour porter les informations de programmation des ressources sans fil et l'envoi à l'UE ; ou
la redéfinition de champs relatifs à la programmation des ressources sans fil dans le message de format PDCCH DCI, pour porter les informations de programmation des ressources sans fil et l'envoi à l'UE.

5. Dispositif de distribution et de programmation de ressources sans fil dans un système de multiplexage par répartition de fréquence orthogonale, le dispositif comprenant :
un module de définition d'unité de ressource (10) configuré pour la définition d'au moins une unité de ressource courte, qui est inférieure à un RB ; configuré pour la définition d'une granularité d'allocation de ressource minimale telle qu'une largeur de domaine de fréquence soit 12 sous-porteuses et une largeur de domaine de temps soit un symbole, dans lequel, lors d'une utilisation pour une allocation de ressources sans fil de liaison montante, le symbole est un symbole d'accès à multiplexage par répartition de fréquence à porteuse unique, SC-FDMA, et, lors d'une utilisation pour une allocation de ressources sans fil de liaison descendante, le symbole est un symbole de multiplexage par répartition de fréquence orthogonale, OFDM ; configuré pour la définition de l'unité de ressource courte en tant qu'un multiple de la granularité d'allocation de ressource minimale, dans lequel, lorsqu'un préfixe cyclique, CP, normal est utilisé, une valeur du multiple est 1 à 13, et, lorsqu'un CP étendu est utilisé, une valeur du multiple est 1 à 11 ;
un module de sélection d'unité de ressource (20) configuré pour la sélection d'une unité de ressource courte en fonction d'une exigence de QoS, et d'un état de canal sans fil d'un équipement d'utilisateur, UE ; et
un module d'allocation/programmation de ressources (30) configuré pour l'allocation des ressources sans fil pour l'équipement d'utilisateur, UE, en fonction de l'unité de ressource courte sélectionnée, et la notification, à l'UE, d'informations de programmation des ressources sans fil.

6. Dispositif de distribution et de programmation des ressources sans fil dans le système de multiplexage par répartition de fréquence orthogonale selon la revendication 5, dans lequel
le module d'allocation/programmation de ressource (30) est en outre configuré pour la notification, à l'UE, des informations de programmation des ressources sans fil par l'intermédiaire d'un message PDCCH ou RRC, ou d'un MAC CE.
